**Europäisches Patentamt**

**European Patent Office**

**Office européen des brevets**

(19)

(11) Publication number: **0 127 392**
**B1**

(12) # EUROPEAN PATENT SPECIFICATION

(45) Date of publication of patent specification: **04.10.89**

(21) Application number: **84303344.0**

(22) Date of filing: **17.05.84**

(51) Int. Cl.⁴: **C 03 B 9/16,** C 03 B 9/40,
C 03 B 9/44

(54) **A parison transferring mechanism for a glassware container manufacturing machine.**

(30) Priority: **21.05.83 GB 8314144**

(43) Date of publication of application:
**05.12.84 Bulletin 84/49**

(45) Publication of the grant of the patent:
**04.10.89 Bulletin 89/40**

(84) Designated Contracting States:
**DE FR IT**

(56) References cited:
**US-A-2 841 025**
**US-A-3 233 999**
**US-A-3 445 218**

(73) Proprietor: **EMHART INDUSTRIES, INC.**
**426 Colt Highway**
**Farmington Connecticut 06032 (US)**

(72) Inventor: **Nebelung, Hermann Heinrich**
**Baslerstrasse 29**
**CH-8048 Zurich (CH)**

(74) Representative: **Randall, John Walter et al**
**Emhart Patents Department Lyn House 39 The**
**Parade**
**Oadby, Leicester LE2 5BB (GB)**

Courier Press, Leamington Spa, England.

EP 0 127 392 B1

## Description

This invention is concerned with a parison transferring mechanism for a glassware container manufacturing machine.

In a glassware container manufacturing machine of the so-called individual section type (See US—A—1,911,119 especially Figure 4), parisons are manufactured in a blank or- parison mould and are transferred to final or blow moulds in which the parison is formed into the required container. The parisons are transferred by a parison transferring mechanism which is also known as an invert mechanism since the parisons are inverted in the course of transfer. The parison transferring mechanism of such a machine comprises parison gripping and releasing means provided by split rings the halves of which are movable towards or away from one another to grip or release a parison, and driving means operable to move the gripping and releasing means between a gripping position thereof in which the means can grip a newly-moulded parison and a releasing position thereof in which the means can release the parison into a mould in which the parison is formed into a container. Conventionally, the driving means operates to swing the gripping and releasing means back and forth about a horizontal axis through an arc of approximately 180°. The gripping and releasing means carries a parison as it is swung in one direction along its arc, releases the parison, and is then swung back to collect a further parison. The driving means comprises a gear on which the gripping and releasing means is mounted, the gear having a cylindrical toothed surface and being mounted for turning movement about the horizontal axis about which the gripping and releasing means is swung. The driving means also comprises a rack having a linear toothed surface having teeth which are meshed with the teeth of said gear. The driving means also comprises moving means operable to move the rack linearly past the gear so as cause the gear to turn about said horizontal axis, the moving means conventionally being a pneumatic piston and cylinder assembly having a piston rod to which the rack is attached.

On conventional machines of the individual section type, the adjustment of the backlash between the gear and the rack of the parison transferring mechanism is carried out by the application of sledge hammer and/or crow bar to the rack so as to move it towards or away from the gear. It is, thus, common that the backlash is incorrect resulting either in the rack and the gear jamming together so as to cause excessive tooth loading with probable damage to the machine, or, if the backlash is too great, parisons transferred by the transferring mechanism are subject to damage due to excessive vibration of the transferring mechanism.

It is an object of the present invention to provide a parison transferring mechanism for a glassware container manufacturing machine in which the aforesaid backlash can be adjusted as desired.

The invention provides a parison transferring mechanism for a glassware container manufacturing machine, the mechanism comprising parison gripping and releasing means' and driving means operable to move the gripping and releasing means between a gripping position thereof in which the means can grip a newly-moulded parison and a releasing position thereof in which the means can release the parison into a mould in which the parison is formed into a container' the driving means operating to swing the gripping and releasing means back and forth about a horizontal axis, the driving means comprising a gear on which the gripping and releasing means is mounted, the gear having a cylindrical toothed surface and being mounted for turning movement about said horizontal axis, a rack having a linear toothed surface having teeth which are meshed with the teeth of said gear, a piston and cylinder assembly operable to move the rack linearly past the gear so as to cause the gear to turn about said horizontal axis, and a guide member integral with the cylinder of said assembly and arranged to hold the rack against movement transversely of or away from said gear, characterised in that the guide member is restrained against movement transversely of the rack in a direction parallel to said horizontal axis by engagement between opposite surfaces of the guide member and restraining means fixed to a frame of the glassware container manufacturing machine, setting means acting against said frame operable to move the guide member and the piston and cylinder assembly transversely of the rack to adjust the backlash between the teeth of the gear and the teeth of the rack, and locking means operable to lock the guide member and the assembly to said frame in the adjusted position.

In a parison transferring mechanism in accordance with the last preceding paragraph, the backlash between the gear and the rack can be adjusted to a limit set by the setting means so that either excessive or too little backlash can be avoided.

Conveniently, the setting means comprises a pin having a first cylindrical portion which passes through a tightly-fitting passage in the guide member and a second cylindrical portion arranged eccentrically of the first cylindrical portion, the second cylindrical portion extending into an oval recess in said frame, the pin also comprising means whereby the pin can be turned to cause force between the second cylindrical portion and the frame to move the first cylindrical portion and hence the guide member relative to the frame.

In order to enable the backlash to be adjusted to a predetermined setting, a scale may be marked on a portion of said pin or on the guide member adjacent said pin, said scale indicating the amount of said backlash.

There now follows a detailed description, to be read with reference to the accompanying drawings, of adjusting means of a parison transferring mechanism which is illustrative of the invention. It is to be understood that the illustrative adjusting means has been selected for description by way of example and not of limitation of the invention as claimed.

In the drawings:

Figure 1 is plan view of the illustrative adjusting means showing some parts in section; and

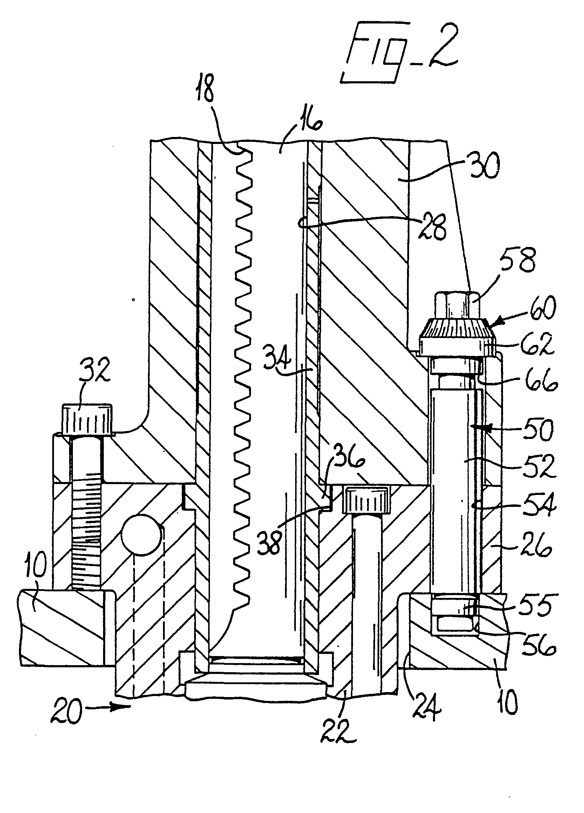

Figure 2 is a cross-sectional view taken on the line II—II in Figure 1.

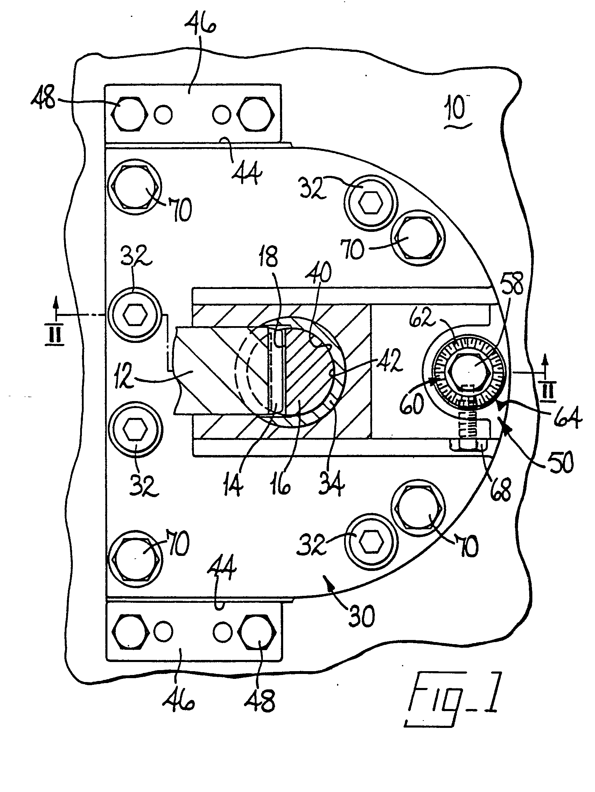

The illustrative adjusting means forms part of a parison transferring mechanism for a glassware container manufacturing machine of the individual section type. This machine has a frame 10 on which the parison transferring mechanism is mounted, the portion of the frame 10 on which the mechanism is mounted being in the form of a horizontal table. The mechanism comprises parison gripping and releasing means (not shown) and driving means operable to move said gripping and releasing means between a gripping position thereof in which the means can grip a newly-moulded parison and a releasing position thereof in which the means can release the parison into a mould of the machine (not shown) in which the parison is formed into a container. The driving means operates to swing the gripping and releasing means back and forth about a horizontal axis, the driving means comprising a gear 12 a portion of which is indicated in Figure 1. The gripping and releasing means of the machine is mounted on the gear 12 in a conventional manner (not shown) and the gear has a cylindrical toothed surface 14 and is mounted for turning movement about said horizontal axis. The driving means also comprises a rack 16 having a linear toothed surface 18 having teeth which are meshed with the teeth of said gear 12. The driving means also comprises moving means provided by a piston and cylinder assembly 20 which is operable to move the rack 16 linearly past the gear 12 so as to cause the gear 12 to turn about said horizontal axis. The piston and cylinder assembly 20 is mounted beneath the frame 10 with an upper end portion 22 of the cylinder of the assembly 20 projecting upwardly through a hole 24 in the frame 10 and an upper flange portion 26 of the cylinder resting on the frame 10 around the hole 24 so as to support the cylinder.

The illustrative adjusting means is operable to adjust the backlash between the teeth of the gear 12 and the teeth of the rack 16. The illustrative adjusting means comprises a guide member 30 defining a guide 28 along which the rack 16 is movable and in which the rack is held against movement relative to the guide member transversely of or away from the gear 12. The guide member 30 is fixed to the flange 26 of the aforementioned cylinder by four bolts 32 which pass through a flange portion of the guide member 30 and are received in threaded holes in the flange 26. The guide 28 is formed in a cylindrical hole passing upwardly through the flange 26 and the member 30 in which a bearing member 34 is mounted. The bearing member 34 has a flange portion 36 which is mounted in a recess 38 in the flange 26 and is retained therein by the member 30. The bearing member 34 provides a surface against which the rack 16 slides, the rack 16 being of generally semi-circular cross section (see Figure 1) and having an arcuate surface 40 which slides along an arcuate surface 42 of the bearing member 34. The bearing member 34 and the guide member 30 have aligned slots therein (not shown) which allow access for the gear 12 to the rack 16. It will be apparent that engagement between the surfaces 40 and 42 prevents the rack 16 from moving away from the gear 12 or transversely of the gear 12 in a direction parallel to said horizontal axis.

The guide member 30 is restrained against movement transversely of the rack 16 in a direction parallel to said horizontal axis by engagement between opposite surfaces 44 thereof which are machined flat and restrainers 46 which are mounted on the frame 10 by means of screws 48. Thus, restraining means provided by the restrainers 46 fixed to the frame 10 of the glassware container manufacturing machine prevents the aforesaid movement. The guide member 30, however, is movable transversely of the rack 16 to adjust the backlash of the rack 16 and the gear 12. This movement is brought about by setting means acting between the guide member 30 and said frame 10. The setting means comprises a pin 50 having a first cylindrical portion 52 which passes through a tightly-fitting passage 54 in the guide member 30 (formed in the flange portion 26) and a second cylindrical portion 55 arranged eccentrically of the first cylindrical portion 52. The second cylindrical portion 55 of the pin 50 extends into an oval recess 56 in the frame 10. The pin 50 also comprises an hexagonal portion 58 which is clear of the guide member 30 which provides means whereby the pin 50 can be turned to cause force between the second cylindrical portion 54 and the frame 10 within the recess 56 to move the first cylindrical portion 52 and hence the guide member 30 and the assembly 20 relative to the frame 10. A scale 60 is marked on a flange portion 62 of the pin 50 to indicate the amount of the backlash by reference to a mark 64 on the frame 10. In an alternative construction, the scale could be marked on the frame 10 and the mark 64 on the flange 62. An annular groove 66 is formed in the cylindrical portion 52 of the pin 50 and is entered by a retaining screw 68 which serves to prevent the pin 50 from moving vertically relative to the guide member 10.

The illustrative parison transferring mechanism also comprises locking means operable to lock the guide member 30 to the frame 10 when the guide member 30 is in its adjusted position. The locking means comprises four locking bolts 70 (see Figure 1) each of which passes through a clearance hole in the guide member 30 and enters a threaded hole in the frame 10. In order to adjust the backlash between the gear 12 and the rack 16, the bolts 70 are loosened, the pin 50 is turned by applying a spanner to the hexagonal portion 58 thereof until the required amount of backlash is achieved as indicated by the scale 60, and then the bolts 70 are tightened again to prevent the guide member 30 from moving out of its adjusted position.

## Claims

1. A parison transferring mechanism for a glassware container manufacturing machine, the mechanism comprising parison gripping and releasing means, and driving means operable to move the gripping and releasing means between a gripping position thereof in which the means can grip a newly-moulded parison and a releasing position thereof in which the means can release the parison into a mould in which the parison is formed into a container, the driving means operating to swing the gripping and releasing means back and forth about a horizontal axis, the driving means comprising a gear (12) on which the gripping and releasing means is mounted, the gear having a cylindrical toothed surface (14) and being mounted for turning movement about said horizontal axis, a rack (16) having a linear toothed surface (18) having teeth which are meshed with the teeth of said gear, a piston and cylinder assembly (20) operable to move the rack (16) linearly past the gear (12) so as to cause the gear to turn about said horizontal axis, and a guide member (30) integral with the cylinder of said assembly (20) and arranged to hold the rack against movement transversely of or away from said gear, characterised in that the guide member (30) is restrained against movement transversely of the rack in a direction parallel to said horizontal axis by engagement between opposite surfaces (44) of the guide member and restraining means (46) fixed to a frame (10) of the glassware container manufacturing machine, setting means (50,56) acting against said frame (10) operable to move the guide member (30) and the piston and cylinder assembly (20) transversely of the rack to adjust the backlash between the teeth of the gear (12) and the teeth of the rack (16), and locking means (70) operable to lock the guide member (30) and the assembly (20) to said frame (10) in the adjusted position.

2. A parison transferring mechanism according to claim 1, characterised in that the setting means comprises a pin (50) having a first cylindrical portion (52) which passes through a tightly-fitting passage (54) in the guide member (30) and a second cylindrical portion (55) arranged eccentrically of the first cylindrical portion, the second cylindrical portion (55) extending into an oval recess (56) in said frame (10), the pin (50) also comprising means (58) whereby the pin (50) can be turned to cause force between the second cylindrical portion (55) and the frame (10) to move the first cylindrical portion (52) and hence the guide member relative to the frame.

3. A parison transferring mechanism according to claim 2, characterised in that a scale (60) is marked on a portion of said pin (50) or on the guide member (30) adjacent said pin, said scale (60) indicating the amount of said backlash.

## Patentansprüche

1. Vorrichtung zum Überführen von Glaskülbchen für eine Maschine zum Herstellen von Glasbehältern, mit einer Einrichtung zum Ergreifen und Freigeben von Külbchen und einer Antriebseinrichtung, mittels welcher die Einrichtung zum Ergreifen und Freigeben zwischen einer Ergreiflage, in welcher sie ein neu geformtes Külbchen ergreifen kann, und einer Freigabelage bewegbar ist, in welcher sie das Külbchen in eine Form abgeben kann, in welcher es in einen Behälter geformt wird, wobei die Antriebseinrichtung ein Zahnrad (12), an welchem die Einrichtung zum Ergreifen und Freigeben angeordnet ist, welches eine zylindrische gezahnte Fläche (14) aufweist und welches zwecks Drehbewegung um die Horizontalachse angeordnet ist, eine eine gerade, gezahnte Fläche (18) aufweisende Zahnstange (16), deren Zähne mit den Zähnen des Zahnrades kämmen, eine Kolben- und Zylinderanordnung (20), mittels welcher die Zahnstange (16) an dem Zahnrad (12) vorbei linear bewegbar ist, um somit das Zahnrad um die Horizontalachse zu drehen, und ein Führungsglied (30) umfaßt, das mit dem Zylinder der Anordnung (20) einstückig ausgebildet ist und so angeordnet ist, daß es die Zahnstange gegen eine Bewegung quer zu oder weg von dem Zahnrad hält, dadurch gekennzeichnet, daß das Führungsglied (30) gegen eine Bewegung quer zur Zahnstange in einer zur Horizontalachse parallelen Richtung durch Eingriff gegenüberliegender Flächen (44) des Führungsgliedes und einer Halteeinrichtung (46) festgehalten ist, welche an einem Rahmen (10) der Maschine befestigt ist, daß eine Einstelleinrichtung (50, 56) gegen den Rahmen (10) wirkt, so daß zwecks Einstellens des Flankenspieles zwischen den Zähnen des Zahnrades (12) und den Zähnen der Zahnstange (16) das Führungsglied (30) und die Kolben- und Zylinderanordnung (20) quer zur Zahnstange bewegbar ist, und daß eine Verriegelungseinrichtung (70) zum Festlegen des Führungsgliedes (30) und der Anordnung (20) an dem Rahmen (10) in der eingestellten Lage vorgesehen ist.

2. Vorrichtung nach Anspruch 1, dadurch gekennzeichnet, daß die Einstelleinrichtung einen Stift (50) aufweist, welcher einen ersten zylindrischen Abschnitt (52), welcher sich durch einen Durchgang (54) in dem Führungsglied (30) erstreckt, und einen zweiten zylindrischen Abschnitt (55) aufweist, der zum ersten zylindrischen Abschnitt exzentrisch angeordnet ist und sich in eine ovale Ausnehmung (56) in dem Rahmen (10) erstreckt, und daß der Stift (50) eine Einrichtung (58) umfaßt, so daß der Stift (50) drehbar ist und eine Kraft zwischen dem zweiten zylindrischen Abschnitt (55) und dem Rahmen (10) erzeugen kann, um somit den ersten zylindrischen Abschnitt (52) und damit das Führungsglied gegen den Rahmen zu bewegen.

3. Vorrichtung nach Anspruch 2, dadurch gekennzeichnet, daß an einem Abschnitt des Stiftes (50) oder an dem Führungsglied (30) neben dem Stift eine Skala (60) vorgesehen ist, welche die Größe des Flankenspieles anzeigt.

**Revendications**

1. Mécanisme de transfert d'ébauches pour une machine de fabrication de récipients en verre, qui comprend des moyens de préhension et de relâchement des ébauches, et des moyens d'entraînement qui sont destinés à déplacer les moyens de préhension et de relâchement entre une position de préhension, dans laquelle les moyens peuvent saisir une ébauche nouvellement moulée, et une position de relâchement, dans laquelle les moyens peuvent lâcher l'ébauche dans un moule dans lequel l'ébauche est moulée pour former un récipient, et qui entrent en jeu pour faire osciller les moyens de préhension et de relâchement suivant un axe horizontal, et qui comprennent une roue dentée (12) sur laquelle les moyens de préhension et de relâchement sont montés et possédant une surface dentée cylindrique (14) disposée pour tourner suivant cet axe horizontal, ainsi qu'une crémaillère (16) possédant une surface dentée linéaire (18) munie de dents qui engrènent avec les dents de la roue dentée, un ensemble à piston et cylindre (20) destiné à animer la crémaillère (16) d'un mouvement rectiligne au droit de la roue dentée (12) de manière à faire tourner la roue dentée selon cet axe horizontal, et un élément de guidage (30) d'une seule pièce avec le cylindre de cet ensemble (20) et agencé pour immobiliser la crémaillère à l'encontre de tout mouvement transversal à cette roue dentée ou qui s'en éloigne, caractérisé en ce que l'élément de guidage (30) est retenu à l'encontre d'un mouvement transversal à la crémaillère dans une direction parallèle à cet axe horizontal par la coopération entre des surfaces opposées (44) de l'élément de guidage et de moyens de retenue (46) fixés au bâti (10) de la machine de fabrication de récipients en verre, et caractérisé par des moyens de réglage (50, 56) qui coopèrent avec ce bâti (10) et sont destinés à déplacer l'élément de guidage (30) et l'ensemble à piston et cylindre (20) dans la direction transversale à la crémaillère pour régler le jeu entre les dents de la roue dentée (12) et les dents de la crémaillère (16), et des moyens de blocage (70) destinés à bloquer l'élément de guidage (30) et l'ensemble (20) sur ce bâti (10) dans la position de réglage adoptée.

2. Mécanisme de transfert d'ébauches selon la revendication 1, caractérisé en ce que les moyens de réglage possèdent une broche (50) avec une première portion cylindrique (52) qui traverse un passage (54) ajusté sans jeu ménagé dans l'élément de guidage (30), et avec une deuxième portion cylindrique (55) qui est disposée excentriquement par rapport à cette première portion cylindrique et qui pénètre dans un évidement oval (56) ménagé dans ce bâti (10), ainsi qu'avec des moyens (58) à l'aide desquels on peut faire tourner la broche (50) pour faire en sorte que la force développée entre la deuxième portion cylindrique (55) et le bâti (10) déplace la première portion cylindrique (52) et, par conséquent, l'élément de guidage par rapport au bâti.

3. Mécanisme de transfert d'ébauches selon la revendication 2, caractérisé en ce qu'une graduation (60) est tracée sur une portion de cette broche (50) ou sur l'élément de guidage (30), dans la région proche à cette broche, pour indiquer la valeur de ce jeu.

Fig_1

FIG_2